(19)

Europäisches Patentamt
European Patent Office
Office européen des brevets

(11) **EP 2 052 487 B1**

(12) **EUROPÄISCHE PATENTSCHRIFT**

(45) Veröffentlichungstag und Bekanntmachung des Hinweises auf die Patenterteilung:
**21.04.2010 Patentblatt 2010/16**

(21) Anmeldenummer: **07802454.4**

(22) Anmeldetag: **01.08.2007**

(51) Int Cl.:
*H04W 12/06* (2009.01)     *H04L 29/06* (2006.01)
*H04L 9/08* (2006.01)

(86) Internationale Anmeldenummer:
**PCT/EP2007/057932**

(87) Internationale Veröffentlichungsnummer:
**WO 2008/019942 (21.02.2008 Gazette 2008/08)**

(54) **VERFAHREN UND ANORDNUNG ZUM BEREITSTELLEN EINES DRAHTLOSEN MESH-NETZWERKS**

METHOD AND ARRANGEMENT FOR PROVIDING A WIRELESS MESH NETWORK

PROCÉDÉ ET DISPOSITIF DE MISE À DISPOSITION DE RÉSEAU MAILLÉ SANS FIL

(84) Benannte Vertragsstaaten:
**DE FR GB IT SE**

(30) Priorität: **17.08.2006 DE 102006038592**

(43) Veröffentlichungstag der Anmeldung:
**29.04.2009 Patentblatt 2009/18**

(73) Patentinhaber: **Siemens Enterprise Communications GmbH & Co. KG**
**81379 München (DE)**

(72) Erfinder:
- **FALK, Rainer**
  **85435 Erding (DE)**
- **KOHLMAYER, Florian**
  **82319 Starnberg (DE)**

(74) Vertreter: **Fritzsche, Thomas et al**
**Fritzsche Patent**
**Naupliastrasse 110**
**81545 München (DE)**

(56) Entgegenhaltungen:
- **AGRE J ET AL: "Secure NOmadic Wireless Mesh (SnowMesh) 802.11 TGs ESS Mesh Networking Proposal" INTERNET CITATION, [Online] Mai 2005 (2005-05), XP007902206 Gefunden im Internet: URL:http://www.flacp.fujitsulabs.com/snowm esh.pdf> [gefunden am 2007-04-27]**
- **FACCIN S M ET AL: "Mesh WLAN Networks: Concept and System Design" IEEE WIRELESS COMMUNICATIONS, IEEE SERVICE CENTER, PISCATAWAY, NJ, US, Bd. 13, Nr. 2, April 2006 (2006-04), Seiten 10-17, XP002415589 ISSN: 1536-1284**

EP 2 052 487 B1

## Beschreibung

Die Erfindung betrifft ein Verfahren zum Bereitstellen eines drahtlosen Mesh-Netzwerks gemäß dem Oberbegriff des Anspruchs 1 sowie eine Anordnung zum Bereitstellen eines drahtlosen Mesh-Netzwerks gemäß dem Oberbegriff des Anspruchs 25.

Die Erfindung betrifft ein Verfahren und ein System zum Bereitstellen eines Schlüssels zur Verschlüsselung von Nachrichten zwischen Knoten eines Mesh-Netzwerkes.

Ein drahtloses Maschen- bzw. Mesh-Netzwerk ist ein vermaschtes Netz, das beispielsweise in einem Wireless Local Area Network (WLAN) implementiert ist. Bei einem Mesh-Netzwerk kann ein mobiler Knoten Daten, die von einem anderen mobilen Knoten stammen, an einen weiteren mobilen Knoten weiterleiten oder an eine Basisstation übertragen. In einem Maschennetzwerk bzw. Mesh-Network können weite Distanzen überspannt werden, insbesondere in unebenen oder schwierigen Terrain. Maschennetze arbeiten zudem sehr zuverlässig, da jeder mobile Knoten mit einigen anderen Knoten verbunden ist. Wenn ein Knoten ausfällt, beispielsweise auf Grund eines Hardware-Defekts, suchen dessen Nachbarknoten eine alternative Datenübertragungsroute. Maschennetze bzw. Mesh-Networks können feste oder mobile Geräte mit einbeziehen.

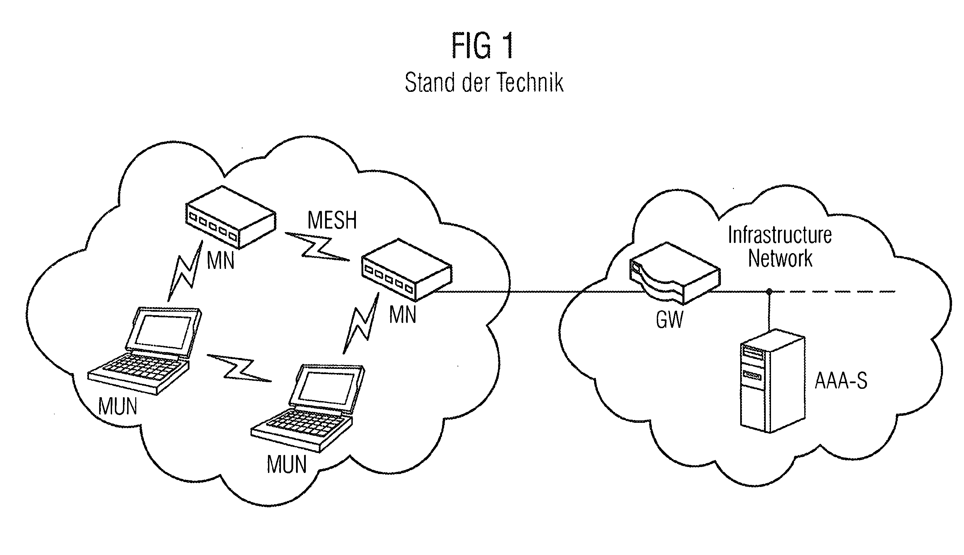

Fig. 1 zeigt schematisch ein Maschennetzwerk nach dem Stand der Technik. Die Knoten umfassen dedizierte Maschenknoten (MN), die zur Infrastruktur des Netzwerkes gehören. Bei diesen dedizierten Maschenknoten kann es sich um eine feste Basisstation BS aber auch um eine mobile Station MS handeln. Neben den dedizierten Maschenknoten umfasst das Maschennetzwerk auch mobile Endgeräte bzw. mobile Knoten von Nutzern. Die mobilen Knoten können direkt mit einem anderen mobilen Knoten kommunizieren und oder direkt oder indirekt über weitere Knoten Daten mit einer Basisstation BS austauschen, die an einem Gateway GW eines Datennetzwerkes angeschlossen ist. Dabei werden Datenpakete DP von einem Gerät bzw. Knoten zum nächsten Gerät weitergeleitet, bis das Zielgerät bzw. das Gateway GW erreicht ist. Die Weiterleitung der Datenpakte DP erfolgt dabei durch dynamisches Routing. Die Routen, auf denen die Datenpakte DP übertragen werden, werden dabei dynamisch auf Basis der Verfügbarkeit der Knoten und auf Basis der Netzauslastung berechnet. Allgemein zeichnen sich Maschennetzwerke durch eine hohe Netzabdeckung, eine hohe Zuverlässigkeit und durch einen sparsamen Umgang mit verfügbaren Ressourcen aus. Bei drahtlosen Maschennetzwerken wird die drahtlose Übertragungstrecke herkömmlicherweise durch eine WLAN (Wireless Local Area Network) Übertragungstrecke realisiert. Im Gegensatz zu einem Wireless Personal Area Network (WPAN) haben WLAN Netze größere Sendeleistungen und Reichweiten und bieten höhere Datenübertragungsraten.

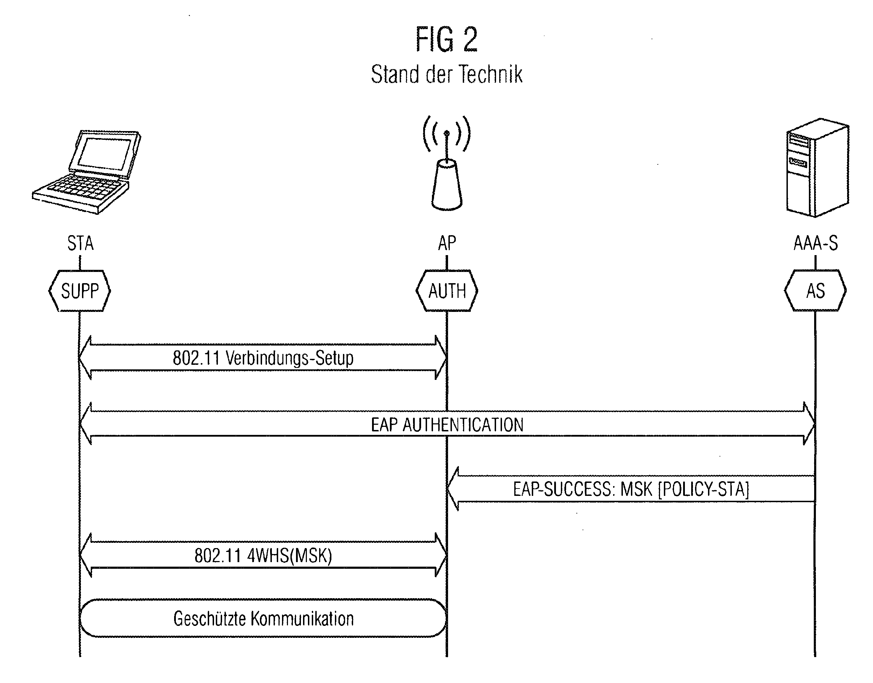

Zur Authentisierung von Knoten bzw. Rechnern wird das sogenannte EAP (Extensible Authentication Protocol) eingesetzt, welches beispielsweise aus der IEEE 802.X-2004: "IEEE standard for local and metropolitan area networks - Port-based network access control", ISBN 0-7381-4528-8, 13. Dezember 2004, S.37-40, bekannt ist. Fig. 2 zeigt ein Signaldiagramm zur Darstellung eines Authentisierungsvorgangs bei einem herkömmlichen WLAN-Netz. Das EAP-Protokoll wird bei WLAN zur Absicherung des Netzwerkzugangs verwendet. Vielfältige konkrete Authentisierungsverfahren, sogenannte EAP-Methoden, können über das EAP-Protokoll transportiert werden, z.B. EAP-TLS, EAP-AKA, PEAP-MSChapv2. Bei der Authentisierung wird ein kryptographischer Schlüssel bzw. Sitzungsschlüssel MSK, EMSK (MSK: Master-Session Key; EMSK: Extended Master Session Key) ermittelt, der nachfolgend zum Schutz der Datenkommunikation, beispielsweise bei der Link-Layer-Verschlüsselung verwendet wird. Die Authentisierung eines Teilnehmers erfolgt zwischen dem Teilnehmer (Supplicant) und einem Authentisierungsserver (AAA-Server). Bei erfolgreicher Authentisierung sendet der Authentisierungsserver das Ergebnis der Authentisierung und den aus der Authentisierung stammenden Sitzungsschlüssel MSK an den Authentikator, beispielsweise einem WLAN-Access-Point AP. Die Kommunikation zwischen dem Zugangsknoten bzw. Access-Point AP und dem Authentisierungsserver erfolgt üblicherweise über das Radius- oder Diameter-Daten-Übertragungs-Protokoll. Dabei wird der Sitzungsschlüssel MSK als Datenattribut an den Zugangsknoten AP als Teil einer EAP-Success-Nachricht gesendet. Der übertragende Sitzungsschlüssel MSK wird anschließend über einen 802.11 4-Wege-Handshake 4WHS zwischen dem Teilnehmer und den Zugangsknoten gemäß dem 802.11 IEEE Standard eingesetzt.

Bei einem herkömmlichen Netzwerk handelt es sich bei dem Zugangsknoten AP um einen vertrauenswürdigen Knoten, d.h. um einen Knoten der Netzinfrastruktur. Bei dem Zugangsknoten handelt es sich bei einem herkömmlichen Netzwerk somit nicht um einen Endnutzerknoten.

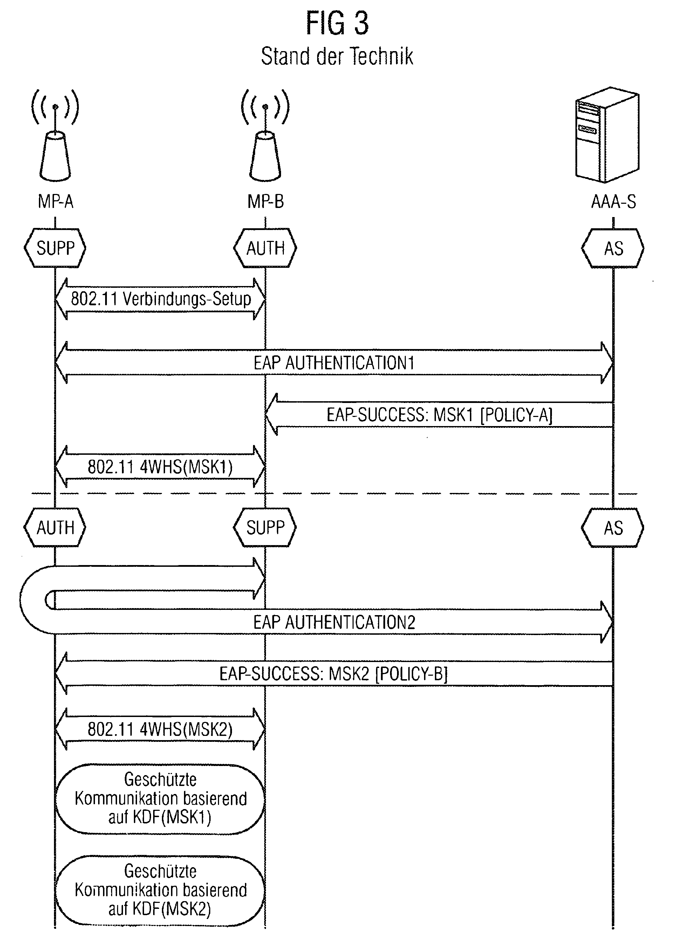

Fig. 3 zeigt die Authentisierung zweier Knoten MP-A, MP-B bei einem herkömmlichen WLAN-Netz. Bei den beiden Knoten MP-A, MP-B kann es sich beispielsweise um zwei Maschenknoten eines Maschennetzwerkes bzw. Mesh-Networks handeln. Zum Aufbau einer Datenverbindung zwischen den beiden Knoten MP-A, MP-B authentisiert sich zunächst der Endknoten MP-A (als Supplicant) bei dem zugehörigen Authentisierungsserver AS mittels des EAP-Datenübertragungsprotokolls. In einer EAP-Success-Nachricht erhält der Knoten MP-B (Authentikator) einen Sitzungsschlüssel MSK1. Anschließend führt der Knoten MP-B mit dem Knoten MP-A einen 4-Wege-Handshake durch und verwendet dabei den erhaltenen Sitzungsschlüssel MSK1. Anschließend führt der Knoten MP-B (nun als Supplicant) eine Authentisierung an dem zugehörigen Authentisierungsserver AS durch, und MP-A (nun Authentikator) erhält in einer EAP-Success-Nachricht einen zweiten Sitzungsschlüssel MSK2. Der Knoten MP-A führt anschließend einen 4-Wege-Handshake mit dem Knoten MP-B unter Verwendung des zweiten Sitzungsschlüssel MSK2 durch. Die beiden Authentisierungen können anstatt nacheinander auch ineinander verschachtelt erfolgen.

Bei der weiteren Kommunikation zwischen den beiden Knoten MP-A, MP-B kann diese durch einen der beiden Sitzungsschlüssel MSK1, MSK2 abgesichert werden.

Ein Nachteil der in Figur 3 dargestellten Vorgehensweise nach dem Stand der Technik besteht darin, dass dabei beide Knoten MP-A und MP-B Verbindung zu dem Authentisierungsserver AS benötigen, und zwar sowohl in der Supplicant-Rolle wie in der Authenticator-Rolle. Wenn ein neuer Knoten den ersten Link zu einem Nachbarknoten aufbaut, verfügt er i.A. noch über keine Verbindung zu einem Infrastrukturnetz und damit auch nicht zu einem Authentisierungsserver AS. Weiterhin muss der Authentisierungsserver AS zwei Authentisierungen durchführen und wird dadurch belastet.

Aus der IEEE 802.11i-2004: "IEEE standard for local and metropolitan area networks - Wireless LAN Medium Access Conrol - Security Enhancements", ISBN 0-7381-4073-2, 23. Juli 2004, S. 13-15, 19-20, ist eine Verbesserung des EAP-Authentifizierungsverfahrens für den Standard IEEE 802.11 bekannt.

Ein WLAN Mesh-Netzwerk ist beispielsweise aus "Faccin, S.M., u.a.: Mesh WLAN networks: concept and system design". Wireless Communications, IEEE. Volume 13, Issue 2, April 2006, S. 10-17, bekannt, wobei sich die Netzelemente gegenseitig authentifizieren.

Aus Jyh-Cheng, C, u.a.: "Wireless LAN security and IEEE 802.11i." Wireless Communications, IEEE, Volume 12, Issue 1, Feb. 2005, S. 27-36, ist eine Erweiterung des aus dem IEEE 802.11 bekannten Authentifizierungsverfahrens zu entnehmen, während in Fan, Y., u.a.: "An improved security scheme in WMAN based on IEEE Standard 802.16." Proceedings, International Conference on Wireless Communications, Networking and Mobile computing, Volume 2, 23.-26.Sept. 2005, S. 1191-1194, eine Erweiterung des aus dem IEEE 802.16 bekannten Authentifizierungsverfahrens beschrieben ist.

Die US 2005/01 52 305 A1 offenbart ein Authentifizierungsverfahren in einem WLAN Netzwerk unter Verwendung eines EAP-Proxys.

Der vorliegenden Erfindung liegt daher die Aufgabe zugrunde, ein verbessertes Verfahren sowie Anordnung zur Bereitstellung eines drahtlosen Mesh-Netzwerks anzugeben.

Diese Aufgabe wird ausgehend von dem Oberbegriff des Anspruchs 1 durch dessen kennzeichnende Merkmale sowie ausgehend vom Gattungsbegriff des Anspruchs 25 durch dessen kennzeichnende Merkmale gelöst.

Bei dem erfindungsgemäßen Verfahren zum Bereitstellen eines drahtlosen lokalen Netzwerks, bei dem nach dem IEEE-802.11-Standard und seinen Derivaten insbesondere IEEE 802.15 oder IEEE 802.16 ausgestaltete stationäre Kommunikationseinrichtungen sowie mobile Kommunikationseinrichtungen nach Art des Mesh als Sub-Netzwerk verbunden sind und an ein Infrastruktur-Netzwerk derart über eine erste Kommunikationseinrichtung der Kommunikationseinrichtungen angeschlossen werden, dass sie mit einem im Infrastruktur-Netzwerk angeordneten Authentication Authorization Accounting AAA-Server unter Nutzung des Extensible Authentication Protocols EAP Authentisierungsnachrichten austauschen können, erfolgt bei einer Anmeldung ein gemäß EAP definierter erster Lauf, bei dem die erste Kommunikationseinrichtung in der gemäß des EAP-Protokolls definierten Rolle eines Authentikators (Authenticators) mit dem AAA-Server kommuniziert, wenn eine zweite Kommunikationseinrichtung sich in der gemäß des EAP-Protokolls definierten Rolle eines Supplikanten (Supplicant) authentisiert. Ferner generiert der AAA-Server im ersten Lauf eine der zweiten Kommunikationseinrichtung zugeordnete Verschlüsselungsbasisinformation für das Sub-Netz, welche der ersten Kommunikationseinrichtung übermittelt wird. Des Weiteren erfolgt bei einer Anmeldung ein gemäß EAP definierter zweiter Lauf, bei dem die erste Kommunikationseinrichtung in der gemäß des EAP-Protokolls definierten Rolle eines Supplikanten (Supplicants) unter Auslassung einer Kommunikation mit dem AAA-Server mit der zweiten Kommunikationseinrichtung kommuniziert, wobei eine Authentisierung im Rahmen des zweiten Laufs auf Grundlage zumindest eines Teils der Verschlüsselungsbasisinformation abgewickelt wird.

Durch das erfindungsgemäße Verfahren kann ein zweiter EAP-Lauf erfolgen, ohne dass auf einem Mesh-Knoten eines SubNetzwerks, welcher keine Verbindung zum AAA-Server hat, vorab Sicherheitsmaterial der ersten Kommunikationseinrichtung eingerichtet wurde. Vielmehr muss der betreffende Mesh-Knoten lediglich, wie aus dem WLAN bekannt, nur mit Sicherheitsmaterial konfiguriert werden, welches ihm die Authentisierung gegenüber einem zentralen AAA-Server ermöglicht.

Vorzugsweise enthält dabei die Verschlüsselungsbasisinformation zumindest einen ersten Verschlüsselungsschlüssel, so dass die Authentisierung gegenüber dem AAA-Server für die zweite Kommunikationseinrichtung bereitgestellt wird.

Vorteilhafter Weise wird dabei der erste Verschlüsselungsschlüssel in der ersten Kommunikationseinrichtung gespeichert, so dass er hier für kommende Transaktionen und Kommunikationen vorgehalten wird.

Bevorzugt erfolgt dabei die Abwicklung der Authentisierung im zweiten Lauf unter Nutzung des ersten Verschlüsselungsschlüssels als so genannten insbesondere geheimen, gemeinsamen Schlüssel ("Preshared-Key").

Werden der Verschlüsselungsbasisinformation zusätzliche Netzwerkattribute bestimmende der ersten Kommunikationseinrichtung zugeordnete erste Parameter, insbesondere eine so genannte Policy wie die maximale Bandbreite, QoS-Reservierungen die Gültigkeitsdauer nutzerbezogene Kontoinformationen und/oder Verkehrsfilterregeln beigefügt, kann eine Anpassung der Kommunikation der zweiten Kommunikationseinrichtung mit der ersten Kommunikationseinrichtung derart angepasst durchgeführt werden, dass die erste Kommunikationseinrichtung diese Parameter durchsetzt.

Werden der Verschlüsselungsbasisinformation zusätzliche Netzwerkattribute bestimmende der zweiten Kommunikationseinrichtung zugeordnete zweite Parameter, insbesondere eine so genannte Policy wie die maximale Bandbreite, QoS-Reservierungen die Gültigkeitsdauer nutzerbezogene Kontoinformation und/oder Verkehrsfilterregeln beigefügt, so kann sich, wie aus dem Stand der Technik bekannt, seitens des AAA-Servers die erste Kommunikationseinrichtung auf die Kommunikation mit der zweiten Kommunikationseinrichtung einrichten.

Werden die zweiten Parameter durch einen zweiten Verschlüsselungsschlüssel geschützt als verschlüsselte erste Parameter übertragen, kann die erste Kommunikationseinrichtung die von ihr an die zweite Kommunikationseinrichtung weitergeleiteten Netzwerkattribute nicht manipulieren.

Eine weitere vorteilhafte Ausgestaltung besteht darin, dass ein dritter die Kommunikation zwischen zweiter Kommunikationseinrichtung und AAA-Server schützender Verschlüsselungsschlüssel abgeleitet wird, wobei die Ableitung sowohl vom AAA-Server als auch von der zweiten Kommunikationseinrichtung durchgeführt wird. Hierdurch wird eine sichere Kommunikation zu dem AAA-Server eingerichtet, so dass die zweite Kommunikationseinrichtung auch weitere Mesh-Knoten authentisieren kann.

Hierzu wird bevorzugt eine vom AAA-Server mittels des dritten Verschlüsselungsschlüssels verschlüsselte Konfiguration der Kommunikation zwischen AAA-Server und zweiter Kommunikationseinrichtung übermittelt.

Dabei besteht eine einfache Ausführungsvariante darin, für den dritten Verschlüsselungsschlüssel den zweiten Verschlüsselungsschlüssel zu verwenden.

Eine weitere vorteilhafte Ausgestaltung besteht darin, dass die Kommunikation der Kommunikationseinrichtungen des SubNetzwerkes und dem AAA-Server mit Hilfe einer nach Art eines Proxy-Servers funktionierenden Station unter Auslassung des AAA-Servers auf Grundlage des dritten Verschlüsselungsschlüssel unter Nutzung des Extensible Authentication Protocol EAP-Protokolls funktioniert. Hierdurch wird eine Entkopplung vom AAA-Server, welche in einigen Anwendungsszenarien erwünscht ist, erreicht und gewährleistet, dass diese Kommunikation gesichert ist.

Funktioniert die Station als Umsetzer zwischen Sub-Netzwerk und Infrastruktur-Netzwerk, wird eine besonders einfache und geeignete Realisierung einer solchen Entkopplung bzw. Entlastung gewährleistet.

Bei einer weiteren vorteilhaften Weiterbildung der Erfindung wird ein vierter, die Kommunikation zwischen zweiter Kommunikationseinrichtung und einer als Umsetzer zwischen Sub-Netzwerk und Infrastruktur-Netzwerk funktionierenden Station schützender Verschlüsselungsschlüssel abgeleitet, wobei die Ableitung vom AAA-Server durchgeführt und über eine gemäß EAP-Protokoll definierte EAP-Success-Nachricht übermittelt wird. Hierdurch wird eine Realisierung bereitgestellt, die Szenarien unterstützt, in dem ein Gateway zwischen einem Sub-Netzwerk und einem Infrastruktur-Netzwerk installiert werden soll, die zudem eine sichere Kommunikation zu diesem Gateway erlaubt.

Vorteilhaft ist es ferner, dass der erste Verschlüsselungsschlüssel, der zweite Verschlüsselungsschlüssel, der dritte Verschlüsselungsschlüssel und/oder der vierte Verschlüsselungsschlüssel von einem dem Sub-Netz zugeordneten Sitzungsschlüssel abgeleitet wird, wobei bevorzugt diese Ableitung auf Grundlage eines gemäß EAP-Protokoll gebildeten Master Session Key MSK unter Verwendung einer Schlüsselableitungsfunktion erfolgt oder alternativ bzw. ergänzend auf Grundlage eines gemäß EAP-Protokoll gebildeten Extended Master Session Key EMSK unter Verwendung einer Schlüsselableitungsfunktion umgesetzt wird, so dass eine einfache Implementierung in EAP-Strukturen gewährleistet ist.

Bevorzugt wird dabei als Schlüsselableitungsfunktion eine Funktion gemäß einer kryptographischen, insbesondere der als SHA1, SHA265 oder MD5 Hash-Funktion verwendet. Alternativ oder ergänzend ist es von Vorteil, wenn als Schlüsselableitungsfunktion eine Funktion gemäß einer Hash-Nachrichtenauthentifizierungscode-Funktion (Keyed-Hash-Funktion), insbesondere HMAC nach RFC2104 verwendet wird.

Eine vorteilhafte Ausgestaltung des ersten Verschlüsselungsschlüssels ergibt sich dabei bei Anwendung einer Schlüsselableitungsfunktion, die durch die Formel

```
MA-Key = HMAC-SHA1 (MSK, "Mesh-Access-Key")
```

gebildet wird, wobei mit "MA-Key" der zugeordnete Schlüssel, mit "HMAC-SHA1" die Keyed-Hash-Funktion HMAC-SHA1 bezeichnet ist und mit "MSK" der gemäß EAP-Protokoll ermittelte Master Session Key und mit "Mesh-Access-Key" eine Zeichenkette, die insbesondere den Verwendungszweck des Schlüssel wiedergibt, bezeichnet ist.

Alternativ dazu kann der erste Schlüssel auch gemäß obiger Formel ermittelt werden nur mit dem Unterschied, dass ein gemäß dem EAP-Protokoll ermittelter "Extended Master Session Key" statt des MSK verwendet wird, so dass nur der AAA-Server und die zweite Kommunikationseinrichtung den Schlüssel ableiten können, wogegen im Fall, dass eine Ableitung sowohl seitens der ersten wie auch der zweiten Kommunikationseinrichtung erfolgen soll, die Ableitung, welche auf MSK basiert, zu bevorzugen ist.

Bevorzugt wird auch für die Ermittlung des zweiten Verschlüsselungsschlüssels eine Schlüsselableitungsfunktion verwendet, welche auf der Formel

```
PP-Key = HMAC-SHA1 (EMSK, "Mesh-Policy-Protection-Key")
```

gebildet ist, wobei mit "PP-Key" der zugeordnete Schlüssel, mit "HMAC-SHA1" die Keyed-Hash-Funktion HMAC-SHA1 bezeichnet ist und mit "EMSK" der gemäß EAP-Protokoll ermittelte "Extended Master Session Key" und mit "Mesh-Policy-Protection-Key" eine Zeichenkette, die insbesondere den Verwendungszweck des Schlüssels wiedergibt, bezeichnet ist.

Die der Erfindung zugrunde liegende Aufgabe wird auch durch eine Anordnung zum Bereitstellen eines drahtlosen lokalen Netzwerks, welche Mittel zur Durchführung des Verfahrens aufweist, dadurch gelöst, dass es die Realisierung des Verfahrens erlaubt.

Weitere Vorteile sowie Details der Erfindung werden ausgehend von den in den Figuren 1 bis 3 dargestellten Ausgangsszenarien gemäß dem Stand der Technik anhand des in Figur 4 dargestellten Ausführungsbeispiels erläutert. Dabei zeigt:

Figur 1    ein Mesh-Netzwerk Szenario,

Figur 2    ein Ablaufdiagram einer Mesh-Authentisierung gemäß Draft D0.01 IEEE802.11s,

Figur 3    ein Ablaufdiagram einer WLAN Authentisierung nach dem Stand der Technik,

Figur 4    ein Ablaufdiagramm eines Ausführungsbeispiels gemäß der Erfindung.

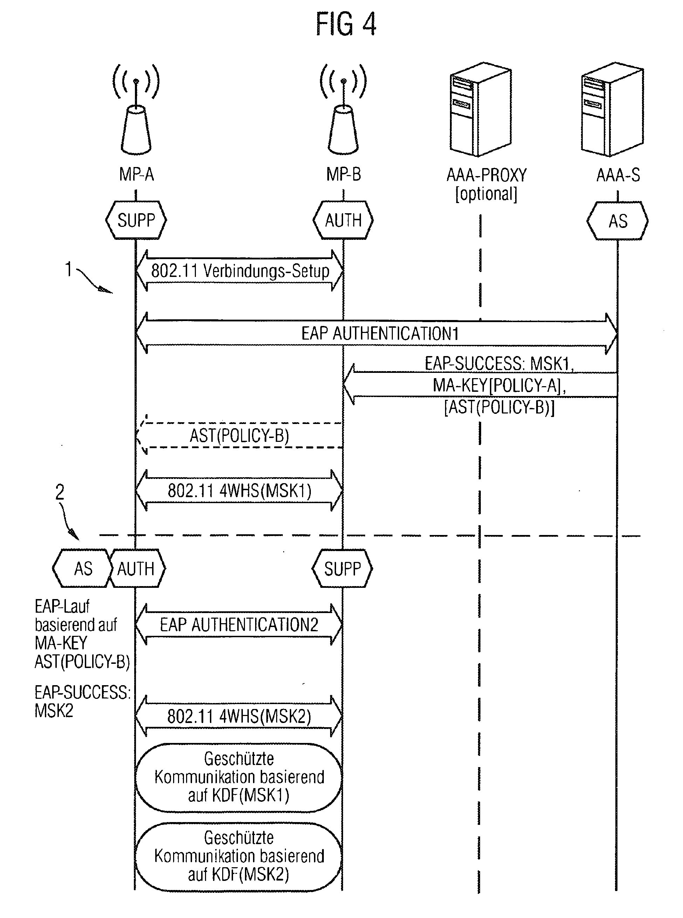

In Figur 4 ist zu erkennen, dass ausgehend von einem in den Figuren 1 bis 3 dargestellten Szenario gemäß dem Stand der Technik eine Anmeldung derart erfolgt, dass in einem ersten Lauf 1 eine Einrichtung einer Verbindung gemäß 802.11 zwischen einer ersten Kommunikationseinrichtung MP-B sowie einer zweiten Kommunikationseinrichtung MP-A erfolgt und im Anschluss hieran eine gemäß EAP durchgeführte Authentisierung EAP AUTHENTICATION1, wie im Stand der Technik bekannt, derart erfolgt, dass die erste Kommunikationseinrichtung MP-B in einer Rolle eines Authenticators AUTH die in einer Rolle als Supplicant SUPP sich befindende zweite Kommunikationseinrichtung MP-A authentisiert. Die Kommunikation läuft hierbei zu einem AAA-Server AAA-S, der als Authentication-Server dient und als Antwort dieses ersten Authentisierungsversuchs EAP AUTHENTICATION1 eine EAP-Success-Nachricht EAP SUCCESS mit einer Verschlüsselungsbasisinformation MSK1, MA-Key [POLICY-A] [AST POLICY-B] an die erste Kommunikationseinrichtung überträgt, welche diese speichert und lediglich optional die verschlüsselte Netzwerkattribute enthaltende Nachricht AST (POLICY-B) an die zweite Kommunikationseinrichtung MP-A überträgt, so dass im nächsten Schritt ein 4-Wege-Handshake 4WHS-1 (MSK1) stattfinden kann.

Erfindungsgemäß kann nun bei dem gemäß EAP vorgesehenen Tausch der Rollen des Authenticators bzw. Supplicants die zweite EAP-Authentisierung EAP AUTHENTICATION 2 erfolgen, ohne dass die zweite Kommunikationseinrichtung eine Verbindung zu dem AAA-Server aufweisen muss bzw. diesen nutzen muss.

Hierbei wird bei dem zweiten Lauf 2 die zweite EAP-Authentisierung EAP AUTHENTICATION 2 auf Basis eines eigens für diesen Zweck gemäß der Erfindung abgeleiteten ersten Schlüssels MA-KEY sowie optional der gesicherten Policy AST (POLICY-B), so dass der AAA-Server AAA-S entlastet ist.

Zu erkennen ist, dass nach dieser zweiten EAP-Authentisierung EAP AUTHENTICATION 2, die eine nicht dargestellte EAP-Success-Nachricht mit einem zweiten Sitzungsschlüssel zur Folge hat, der 4-Wege-Handshake des zweiten Laufs 4WHS-2 (MSK2) erfolgen kann, so dass im Folgenden eine geschützte Kommunikation auf Grundlage eines ersten oder eines zweiten Sitzungsschlüssels zwischen der Kommunikationseinrichtung MP-B und der zweiten Kommunikationseinrichtung MP-A erfolgen kann.

Zusammenfassend lässt sich also sagen, dass durch das erfindungsgemäße Verfahren ein zusätzlicher Mesh-Access-Key MA-KEY eingerichtet wird, wobei dieser vorzugsweise aus dem erweiterten Sitzungsschlüssel EMSK durch eine Schlüsselableitungsfunktion KDF abgeleitet und von AAA-Server AAA-S an die zweite Kommunikationseinrichtung MP-B als Teil der EAP-Success-Nachricht EAP-SUCCESS übertragen wird. Dabei erfolgt die Ableitung durch die erste Kommunikationseinrichtung MP-A sowie den AAA-Server AAS.

In vorteilhafter Weise geeignet für die Erfindung sind dabei als Schlüsselableitungsfunktion insbesondere kryptographische Hash-Funktionen wie beispielsweise SHA-1, SHA256, MD5 oder darauf basierende Keyed-Hash-Funktion wie beispielsweise HMAC nach RFC2104.

Eine konkrete Implementierung, die sich besonders eignet, wäre daher zum Beispiel

```
MA-KEY = HMAC-SHA1 (EMSK, "Mesh-Access-Key")
```

Dabei ist "Mesh-Access-Key" eine Zeichenkette, die den Verwendungszweck angibt.

Erfindungsgemäß können aber auch optional weitere Parameter in die Schlüsselableitung (Key Derivation) als Teil der Zeichenkette eingeschlossen werden. Hierfür eignet sich insbesondere die MAC-Adresse des Authenticators AUTH, das heißt desjenigen Mesh-Knotens, der in dem jeweiligen EAP-Lauf die Rolle des Authenticators wahrnimmt, wie hier zum Beispiel die erste Kommunikationseinrichtung MP-B. Geeignet wäre auch die MAC-Adresse des Supplicants SUPP, das heißt desjenigen Mesh-Knotens, der in dem EAP-Lauf die Rolle des Supplicant einnimmt, in der Darstellung die zweite Kommunikationseinrichtung MP-A, soweit diese Information bei der erstmaligen EAP-Authentisierung EAP AUTHENTICATION 1 an den AAA-Server AAA-S gesendet wird.

Ein derartig erfindungsgemäß abgeleiteter Mesh-Access-Key MA-KEY wird dann als so genannter Pre-Issued-Key für eine zweite EAP Authentisierung EAP-AUITHENTICATION2 verwendet. Dabei ist eine geeignete EAP-Methode die Methode EAP-PSK. Ferner sind in vorteilhafter Weise für das erfindungsgemäße Verfahren auch die derzeit von der IETF Working Group EMU sich in Entwicklung befindenden EAP-Methoden (vgl. http://www.ietf.org/html.charters/emu-charter.html)

Alternativ lässt sich auch gemäß der Erfindung der Mesh-Access-Key MA-KEY auch aus dem Sitzungsschlüssel MSK an Stelle des erweiterten Sitzungsschlüssels EMSK ableiten, wobei dies den Vorteil hat, dass die zweite Kommunikationseinrichtung MP-B diesen Schlüssel selbstständig ableiten kann.

Bezüglich der Policy, welche vom AAA-Server AAA-S für den Supplicant SUPP gedacht ist, lässt sich bezüglich der Erfindung feststellen, dass der AAA-Server AAA-S eine für die erste Kommunikationseinrichtung MP-A gedachte Policy POLICY-A an die zweite Kommunikationseinrichtung MP-B senden kann, wie dies bereits aus dem Stand der Technik bekannt ist. Erfindungsgemäß kann, wie gezeigt, auch darüber hinaus der AAA-Server AAA-S auch eine Policy für die zweite Kommunikationseinrichtung MP-B POLICY-B senden, wobei diese durch die erste Kommunikationseinrichtung MP-A in der Kommunikation mit der zweiten Kommunikationseinrichtung MP-B durchgesetzt wird.

Dabei sieht die Erfindung vor, dass diese Policy POLICY-B nicht vom AAA-Server AAA-S direkt an die zweite Kommunikationseinrichtung MP-B gesendet werden kann, so dass erfindungsgemäß vorgesehen ist, sie zunächst an die zweite Kommunikationseinrichtung MP-B zu senden, welche diese dann an die erste Kommunikationseinrichtung MP-A weitersendet.

Vorteilhaft sieht dabei die Erfindung als weitere Ausgestaltung vor, dass, um eine Manipulation dieser Policy POLICY-B zu vermeiden, diese mit einer kryptographischen Prüfsumme (Message Authentication Code, MAC) zu sichern, so dass damit eine so genannte Asserted Policy AST(POLICY-B) erzeugt wird. Dabei ist als Schlüssel vorzugsweise ein weiterer Schlüssel PP-KEY (Policy Protection Key) aus dem erweiterten Sitzungsschlüssel EMSK abzuleiten.

Eine konkrete Ausgestaltung dieser Ableitung ist durch die Formel

```
PP-KEY = HMAC-SHA1 (EMSK, "Mesh-Policy-Protection-Key")
```

geeignet, wobei dieser weitere Schlüssel PP-KEY nicht von dem AAA-Server AAA-S an die zweite Kommunikationseinrichtung MP-B übertragen wird.

Die geschützte Policy B AST(POLICY-B) wird dann von der zweiten Kommunikationseinrichtung MP-B an die erste Kommunikationseinrichtung MP-A übertragen und kann durch die kryptographische Prüfsumme und aufgrund der Tatsache, dass die zweite Kommunikationseinrichtung MP-B den weiteren Schlüssel PP-KEY nicht kennt, die geschützte Policy AST(Policy-B) nicht manipulieren, obwohl diese die zweite Kommunikationseinrichtung MP-B betrifft.

Das erfindungsgemäße Einrichten einer sicheren Kommunikation zu dem AAA-Server AAA-S stellt sich dabei wie folgt dar.

Für die Fälle, dass sich die anmeldende erste Kommunikationseinrichtung MP-A auch weitere Mesh-Knoten authentisieren können soll, so muss ihm grundsätzlich erstmal eine Kommunikation zu dem AAA-Server AAA-S ermöglicht werden.

Es ist bekannt, die entsprechenden Parameter wie die Adresse des AAA-Servers AAA-S sowie ein Shared Secret zum Schutz der Kommunikation explizit zu konfigurieren. Dies ist jedoch unpraktisch und skaliert schlecht für eine große Anzahl von Mesh-Knoten.

Erfindungsgemäß wird daher ein Schlüssel AAA-Key zur sicheren Kommunikation zwischen Mesh-Knoten und dem AAA-Server AAA-S eingerichtet, wobei sich der erfindungsgemäß wie folgt aus dem erweiterten Sitzungsschlüssel EMSK ableitet.

```
AAA-KEY = HMAC-SHA1 (EMS, "Mesh-AAA-Key")
```

Auch dieser Schlüssel wird von dem AAA-Server AAA-S und der ersten Kommunikationseinrichtung MP-A berechnet und zum Schutz der Kommunikation zwischen diesen beiden Knoten verwendet.

Weitere Parameter zur Kommunikation mit dem AAA-Server AAA-S wie beispielsweise die IP-Adresse AAA-Servers AAA-S oder weiteres Schlüsselmaterial können durch den Schlüssel AAA-Key ebenfalls geschützt von dem AAA-Server AAA-S an die erste Kommunikationseinrichtung MP-A übertragen werden. Dies kann ähnlich wie für die gesicherte Policy AST(POLICY-B) erfolgen, so dass eine gesicherte Konfiguration AST(AAA-CONFIG) übertragen wird, wobei diese von einem anderen Schlüssel, nämlich dem genannten AAA-KEY entsprechend geschützt wird.

Gemäß einer weiteren vorteilhaften Ausgestaltung wird für den Fall, dass der AAA-KEY übertragen werden muss, zusätzlich zum Integritätsschutz auch die Vertraulichkeit gesichert werden. Ferner ist es erfindungsgemäß denkbar, auch einen weiteren abgeleiteten Schlüssel als (Radius) Shared-Secret für die Kommunikation zu verwenden. Auch ist es denkbar, als AAA-KEY den weiteren Schlüssel PP-KEY zu verwenden.

Erfindungsgemäß stellt sich ein Einrichten einer sicheren Kommunikation zu einem AAA-PROXY, der in manchen Szenarien, in denen es erwünscht ist, dass ein Mesh-Knoten nicht direkt mit dem AAA-Server AAA-S kommuniziert, sondern über einen zwischengeschaltete Station AAA-PROXY wie folgt dar.

Um die Funktionalität eines Proxys AAA-PROXY beispielsweise auf einem Mesh-Gateway zu ermöglichen, wird der AAA-KEY als Teil der EAP-Success-Nachricht EAP-SUCCESS von AAA-S an den AAA-Proxy gesendet. Die Station AAA-PROXY speichert dabei diesen Schlüssel zur späteren Kommunikation mit der ersten Kommunikationseinrichtung MP-A, die, wie oben beschrieben, gesichert möglich ist. Vorzugsweise entfernt dabei die Station AAA-PROXY dieses Attribut, bevor er die Nachricht an die zweite Kommunikationseinrichtung MP-B weiterleitet.

Alternativ könnte der AAA-KEY auch aus dem Sitzungsschlüssel MSK statt dem erweiterten Sitzungsschlüssel EMSK abgeleitet werden. Dies hätte den Vorteil, dass die Ableitung nicht nur durch den AAA-Server AAA-S, sondern auch von der Station AAA-PROXY selbst vorgenommen werden kann. In diesem Fall sollte aber der Sitzungsschlüssel MSK von der Station AAA-PROXY entfernt werden und durch einen weiteren aus dem Sitzungsschlüssel MSK abgeleiteten Schlüssel ersetzt werden. Dies muss der ersten Kommunikationseinrichtung MP-A mitgeteilt werden, wobei dies zum Beispiel über die gesicherte Konfiguration AST(AAA-CONFIG) gesichert mit dem durch den ursprünglichen Sitzungsschlüssel MSK erfolgt.

Erfindungsgemäß wird auch auf Szenarien Rücksicht genommen, bei denen es erwünscht sein kann, zusätzlich eine Sicherheitsbeziehung zu einem Mesh-Gateway-Knoten einzurichten, wobei dies, wie oben für einen Station AAA-PROXY beschrieben, ermöglicht wird, wenn der Gateway-Knoten GW im AAA-Nachrichtenpfad liegt. Der GW-Knoten GW kann den entsprechenden Schlüssel dabei aus der Success-Nachricht EAP-SUCCESS und für die Kommunikation benutzen. Dieser GW-Schlüssel stellt sich bei einer vorteilhaften Konkretisierung wie folgt dar.

```
GW-KEY = HMAC-SHA1 (EMSK, "Mesh-GW-Key")
```

Dieser GW-Schlüssel GW-KEY kann insbesondere verwendet werden, um die Kommunikation der ersten Kommunikationseinrichtung MP-A mit dem Infrastrukturnetz INFRASTRUCTURE NETWORK zu schützen, beispielsweise mit Hilfe von IP-SEC, so dass Zwischenknoten des Mesh-Netzes dadurch keinen Zugriff auf die Klartextdaten von der ersten Kommunikationseinrichtung MP-A haben.

Die Erfindung löst damit das Problem einer Mesh-Netzwerk-Anmeldung, bei der nur einer der beiden Mesh-Knoten Konnektivität zu einem zentralen AAA-Server AAA-S besitzt, wobei dies im Wesentlichen durch folgende Kernschritte erreicht wird.

a) Bei einem ersten EAP-Lauf übernimmt derjenige Mesh-Knoten die Authenticator-Rolle AUTH, welcher über Konnektivität zum AAA-Server AAA-S verfügt.

Bei dem ersten EAP-Lauf wird des weiteren Sicherheitsmaterial (Schlüssel, optional eine Policy) eingerichtet, welche in einem zweiten EAP-Lauf verwendet wird.

Das Sicherheitsmaterial wird dabei dem lokalen Authentication-Server AS übergeben, um den zweiten EAP-Lauf zu ermöglichen.

Ferner wird, wenn das Sicherheitsmaterial eingerichtet ist, dabei ist hier der Authentication-Server AS lokal realisiert, das heißt, auf demjenigen Mesh-Knoten (Authenticator), der über keine Verbindung zum AAA-Server AAA-S verfügt.

Dabei können durch diese erfindungsgemäße Vorgehensweise die EAP-Läufe nicht mehr parallel durchgeführt werden, sondern lediglich sequenziell in der vorgegebenen Reihenfolge. Dies stellt aber kein Problem dar, da die beiden EAP-Läufe beliebig ineinander verschachtelt werden können. Eine Implementierung der Erfindung in bestehende EAP-Systeme ist daher aufwandsarm möglich, denn die beliebige Verschachtelung schließt auch die Möglichkeit ein, sie nacheinander durchzuführen. Zusammenfassend lässt sich auch sagen, dass erfindungsgemäß auch weiteres Sicherheitsmaterial für die Kommunikation zwischen der ersten Kommunikationseinrichtung MP-A und dem AAA-Server AAA-S beziehungsweise einer Station AAA-PROXY oder einem Gateway GW eingerichtet werden kann.

Die Vorteile der Erfindung lassen sich dabei wie folgt zusammenfassen:

Ein Vorteil liegt darin, dass der zweite EAP-Lauf erfolgen kann, ohne dass auf demjenigen Mesh-Knoten, der keine Verbindung zu einem AAA-Server AAA-S hat, vorab Sicherheitsmaterial eines anderen Mesh-Knotens eingerichtet werden muss. Durch die Erfindung ist es lediglich erforderlich, wie bei einer normalen WLAN-Station üblich, nur mit Sicherheitsmaterial konfiguriert werden, die ihm eine Authentisierung gegenüber dem zentralen AAA-Server AAA-S ermöglicht.

Das heißt, der AAA-Server AAA-S muss nicht auf Mesh-Knoten repliziert werden, so dass auch eine umfangreiche Datenbank und somit ein erhöhter Speicherbedarf nicht mehr notwendig sind. Ferner wird die Gefahr vermieden, Mesh-Knoten, auf denen AAA-Server Funktionalität repliziert ist, sich als AAA-Server für andere Dienste, wie beispielsweise IPsec VPN auf Basis von IKEv2 missbräuchlich auszugeben und damit die Sicherheit dieser Dienste zu verringern. Auch wird es vermieden, dass sicherheitsrelevante Daten anderer Geräte auf unterschiedlich vertrauenswürdigen Mesh-Knoten, zum Beispiel Endnutzergeräten untergebracht werden.

## Patentansprüche

1. Verfahren zum Bereitstellen eines drahtlosen lokalen Netzwerks, aufweisend nach dem IEEE 802.11 Standard und seinen Derivaten, insbesondere IEEE 802.15 oder IEEE 802.16, ausgestaltete stationäre Kommunikationseinrichtungen (AP) sowie mobile Kommunikationseinrichtungen (STA, AP, MP-A, MP-B) eines Mesh-Subnetzwerks (MESH NODES), welche an ein Infrastrukturnetzwerk (INFRASTRUKTUR NETZWERK) derart über eine erste Kommunikationseinrichtung (MP-B, AAA-PROXY) der Kommunikationseinrichtungen angeschlossen werden, dass es mit einem im Infrastrukturnetzwerk (INFRASTRUKTUR NETZWERK) angeordneten "Authentication, Authorisation, Accounting AAA"-Server (AAA-S) unter Nutzung des "Extensible Authentication Protocol - EAP" Protokolls Authentisierungsnachrichten austauschen kann **dadurch gekennzeichnet, dass**

   a) ein bei einer Anmeldung gemäß EAP definierter erster Lauf (1) erfolgt bei dem die erste Kommunikationseinrichtung (MP-B) in der gemäß des EAP Protokolls definierten Rolle eines "Authenticators" (AUTH) mit dem AAA-Server (AAA-S) kommuniziert,
   b) der AAA-Server (AAA-S) im ersten Lauf eine Verschlüsselungsbasisinformation (MA-KEY, MSK1, POLICY-A, AST(POLICY-B)) für das Subnetz (MESH NODES) generiert,
   c) die Verschlüsselungsbasisinformation (MA-KEY, MSK1, POLICY-A, AST(POLICY-B)) der ersten Kommunikationseinrichtung (MP-B) übermittelt wird,
   d) ein bei einer Anmeldung gemäß EAP definierter zweiter Lauf (2) erfolgt, bei dem die erste Kommunikationseinrichtung (MP-B) in der gemäß des EAP Protokolls definierten Rolle eines "Supplicants" (SUPP) unter Auslassung einer Kommunikation mit dem AAA-Server (AAA-S) mit einer zweiten Kommunikationseinrichtung (MP-A) kommuniziert, wobei eine Authentisierung im Rahmen des zweiten Laufs (2) auf Grundlage zumindest eines Teils der Verschlüsselungsbasisinformation (MA-KEY, MSK1, POLICY-A, AST(POLICY-B)) abgewickelt wird.

2. Verfahren nach Anspruch 1, **dadurch gekennzeichnet, dass** die Verschlüsselungsbasisinformation (MA-KEY, MSK1, POLICY-A, AST(POLICY-B)) zumindest einen ersten Verschlüsselungsschlüssel (MA-KEY) enthält.

3. Verfahren nach Anspruch 2, **dadurch gekennzeichnet, dass** der erste Verschlüsselungsschlüssel (MA-KEY) in der ersten Kommunikationseinrichtung (MP-B) gespeichert wird.

4. Verfahren nach dem vorhergehenden Anspruch, **dadurch gekennzeichnet, dass** die Abwicklung der Authentisierung im zweiten Lauf unter Nutzung des ersten Verschlüsselungsschlüssels (MA-KEY) als gemeinsamen, insbesondere geheimen, Schlüssel "pre-shared Key" erfolgt.

5. Verfahren nach einem der vorhergehenden Ansprüche, **dadurch gekennzeichnet, dass** der Verschlüsselungsbasisinformation (MA-KEY, MSK1, POLICY-A, AST(POLICY-B)) zusätzlich Netzwerkattribute bestimmende der ersten Kommunikationseinrichtung (MP-B) zugeordnete erste Parameter, insbesondere eine so genannte Policy (AST(POLICY-B)) wie die maximale Bandbreite, QoS-Reservierungen, die Gültigkeitsdauer, nutzerbezogene Kontoinformationen und/oder Verkehrsfilterregel, beigefügt werden.

6. Verfahren nach einem der vorhergehenden Ansprüche, **dadurch gekennzeichnet, dass** der Verschlüsselungsbasisinformation (MA-KEY, MSK1, POLICY-A, AST(POLICY-B)) zusätzlich Netzwerkattribute bestimmende der zweiten Kommunikationseinrichtung (MP-A) zugeordnete zweite Parameter, insbesondere eine so genannte Policy (POLICY-A) wie die maximale Bandbreite, QoS-Reservierungen, die Gültigkeitsdauer, nutzerbezogene Kontoinformationen und/oder Verkehrsfilterregel, beigefügt werden.

7. Verfahren nach dem vorhergehenden Anspruch, **dadurch gekennzeichnet, dass** die zweiten Parameter (POLICY-B) durch einen zweiten Verschlüsselungsschlüssel geschützt als verschlüsselte erste Parameter (AST(POLICY-B)) übertragen werden.

8. Verfahren nach dem vorhergehenden Anspruch, **dadurch gekennzeichnet, dass** die zweiten Parameter (AST(POLICY-B)) von der ersten Kommunikationseinrichtung (MP-B) zur zweiten Kommunikationseinrichtung (MP-A) übertragen wird.

9. Verfahren nach einem der vorhergehenden Ansprüche, **dadurch gekennzeichnet, dass** ein dritter die Kommunikation zwischen zweiter Kommunikationseinrichtung (MP-A) und AAA-Server (AAA-S) schützender Verschlüsselungsschlüssel abgeleitet wird, wobei die Ableitung sowohl vom AAA-Server (AAA-S) als auch von der zweiten Kommunikationseinrichtung (MP-A) durchgeführt wird..

10. Verfahren nach dem vorhergehenden Anspruch, **dadurch gekennzeichnet, dass** der AAA-Server (AAA-S) mittels dem dritten Verschlüsselungsschlüssel verschlüsselte Konfiguration (AST(AAA-CONFIG)) der Kommunikation zwischen AAA-Server (AAA-S) und zweiter Kommunikationseinrichtung (MP-B) übermittelt.

11. Verfahren nach einem der Ansprüche 9 bis 10, **dadurch gekennzeichnet, dass** der dritte Verschlüsselungsschlüssel dem zweiten Verschlüsselungsschlüssel entspricht.

12. Verfahren nach einem der Ansprüche 9 bis 11, **dadurch gekennzeichnet, dass** die Kommunikation der Kommunikationseinrichtungen (MP-A, MP-B) des Subnetzwerkes (MESH NODE) und dem AAA-Server (AAA-S) mit Hilfe einer nach Art eines Proxy-Servers funktionierenden Station (AAA-PROXY) unter Auslassung des AAA-Servers (AAA-S) auf Grundlage des dritten Verschlüsselungsschlüssels unter Nutzung des "Extensible Authentication Protocol - EAP" Protokolls funktioniert.

13. Verfahren nach dem vorhergehenden Anspruch, **dadurch gekennzeichnet, dass** die Station als Umsetzer (GW) zwischen Subnetzwerk (MESH NODES) und Infrastrukturnetzwerk (INFRASTRUCTURE NETWORK) funktioniert.

14. Verfahren nach einem der vorherigen Ansprüche, **dadurch gekennzeichnet, dass** ein vierter die Kommunikation zwischen zweiter Kommunikationseinrichtung (MP-A) und einer als Umsetzer (GW) zwischen Subnetzwerk (MESH NODES) und Infrastrukturnetzwerk (INFRASTRUCTURE NETWORK) funktionierenden Station (GW) schützender Verschlüsselungsschlüssel abgeleitet wird, wobei die Ableitung vom AAA-Server (AAA-S) durchgeführt und über eine gemäß EAP-Protokoll definierte EAP-Success-Nachricht (EAP-SUCCESS) übermittelt wird.

15. Verfahren nach einem der Ansprüche 2, 7 oder 9 bis 14, **dadurch gekennzeichnet, dass** der erste Verschlüsselungsschlüssel, der zweite Verschlüsselungsschlüssel, der dritte Verschlüsselungsschlüssel und/oder der vierte Verschlüsselungsschlüssel von einem dem Subnetz zugeordneten Sitzungsschlüssel (EMSK, MSK) abgeleitet werden.

16. Verfahren nach einem der Ansprüche 9 bis 15, **dadurch gekennzeichnet, dass** die Ableitung auf Grundlage einer den gemäß EAP-Protokoll gebildeten "Master Session Key, MSK" verwendenden Schlüsselableitungsfunktion (KDF) erfolgt.

17. Verfahren nach einem der Ansprüche 9 bis 15 soweit sie den Gegenstand eines der Ansprüche 9 bis 13 und 15 umfassen, **dadurch gekennzeichnet, dass** die Ableitung auf Grundlage einer den gemäß EAP-Protokoll gebildeten "Extended Master Session Key, EMSK" verwendenden Schlüsselableitungsfunktion (KDF) erfolgt.

18. Verfahren nach dem vorhergehenden Anspruch, **dadurch gekennzeichnet, dass** als Schlüsselableitungsfunktion (KDF) eine Funktion gemäß einer kryptographischen, insbesondere SHA-1 oder MD5, Hash-Funktion verwendet wird.

19. Verfahren nach dem Anspruch 17, **dadurch gekennzeichnet, dass** als Schlüsselableitungsfunktion (KDF) eine Hash-Nachrichtenauthentifizierungscode-Funktion "Keyed-Hash-Funktion", insbesondere HMAC gemäß RFC2104, verwendet wird.

20. Verfahren nach einem der Ansprüche 2 oder 3 bis 19 soweit sie den Gegenstand des Anspruchs 2 umfassen, **dadurch gekennzeichnet, dass** der erste Verschlüsselungsschlüssel gemäß folgender auf Schlüsselableitungsfunktionen basierender Formel

$$\text{MA-Key = HMAC-SHA1 (MSK, „Mesh-Access-Key")}$$

gebildet wird, wobei mit

MA-Key der zugeordnete Schlüssel,
HMAC-SHA1 eine Keyed Hash Funktion HMAC unter Verwendung der Hash-Funktion SHA-1, bezeichnet ist, und mit
MSK der gemäß EAP-Protokoll ermittelte "Master Session Key" und mit
Mesh-Access-Key eine Zeichenkette, die insbesondere den Verwendungszweck des Schlüssels wiedergibt, bezeichnet ist.

21. Verfahren nach einem der Ansprüche 2 oder 3 bis 19 soweit sie den Gegenstand des Anspruchs 2 umfassen, **dadurch gekennzeichnet, dass** der erste Verschlüsselungsschlüssel gemäß folgender auf Schlüsselableitungsfunktionen basierender Formel

$$\text{MA-Key = HMAC - SHA1 (EMSK, „Mesh-Access-Key")}$$

gebildet wird, wobei mit

MA-Key der zugeordnete Schlüssel,
HMAC-SHA1 eine Keyed Hash Funktion HMAC unter Verwendung der Hash-Funktion SHA-1, bezeichnet ist, und mit
EMSK der gemäß EAP-Protokoll ermittelte "Extended Master Session Key" und mit
Mesh-Access-Key eine Zeichenkette, die insbesondere den Verwendungszweck des Schlüssels wiedergibt, bezeichnet ist.

22. Verfahren nach einem der Ansprüche 7 oder 8 bis 21 soweit sie den Gegenstand des Anspruchs 7 umfassen, **dadurch gekennzeichnet, dass** der zweite Verschlüsselungsschlüssel gemäß folgender auf Schlüsselableitungsfunktionen basierender Formel

$$\text{PP-Key = HMAC-SHA1 (EMSK, „Mesh-Policy-Protection-Key")}$$

gebildet wird, wobei mit

PP-Key der zugeordnete Schlüssel,
HMAC-SHA1 eine Keyed Hash Funktion HMAC unter Verwendung der Hash-Funktion SHA-1, bezeichnet ist, und mit
EMSK der gemäß EAP-Protokoll ermittelte "Extended Master Session Key" und mit
Mesh-Policy-
Protection-Key eine Zeichenkette, die insbesondere den Verwendungszweck des Schlüssels wiedergibt, bezeichnet ist.

**23.** Verfahren nach einem der Ansprüche 9 oder 10 bis 22 soweit sie den Gegenstand des Anspruchs 9 umfassen, **dadurch gekennzeichnet, dass** der dritte Verschlüsselungsschlüssel gemäß folgender auf Schlüsselableitungs-funktionen basierender Formel

$$\texttt{AAA-Key = HMAC-SHA1 (EMSK, „Mesh-AAA-Key")}$$

gebildet wird, wobei mit

AAA-Key der zugeordnete Schlüssel,
HMAC-SHA1 eine Keyed Hash Funktion HMAC unter Verwendung der Hash-Funktion SHA-1, bezeichnet ist, und mit
EMSK der gemäß EAP-Protokoll ermittelte "Extended Master Session Key" und mit
Mesh-AAA-Key eine Zeichenkette, die insbesondere den Verwendungszweck des Schlüssels wiedergibt, bezeichnet ist.

**24.** Verfahren nach einem der Ansprüche 14 oder 15 bis 23 soweit sie den Gegenstand des Anspruchs 14 umfassen, **dadurch gekennzeichnet, dass** der vierte Verschlüsselungsschlüssel gemäß folgender auf Schlüsselableitungs-funktionen basierender Formel

$$\texttt{GW-Key = HMAC-SHA1 (EMSK, „Mesh-GW-Key")}$$

gebildet wird, wobei mit

GW-Key der zugeordnete Schlüssel,
HMAC-SHA1 eine Keyed Hash Funktion HMAC unter Verwendung der Hash-Funktion SHA-1, bezeichnet ist, und mit
EMSK der gemäß EAP-Protokoll ermittelte "Extended Master Session Key" und mit
Mesh-GW-Key eine Zeichenkette, die insbesondere den Verwendungszweck des Schlüssels wiedergibt, bezeichnet ist.

**25.** Anordnung zum Bereitstellen eines drahtlosen lokalen Netzwerks, **gekennzeichnet durch** Mittel zur Durchführung des Verfahrens nach einem der vorhergehenden Ansprüche.

## Claims

**1.** Method for providing a wireless local network, having stationary communication devices (AP) developed according to the IEEE 802.11 standard and its derivatives, in particular IEEE 802.15 or IEEE 802.16, and mobile communication devices (STA, AP, MP-A, MP-B) of a mesh sub network (MESH NODES), which are connected to an infrastructure network (INFRASTRUCTURE NETWORK) in such a manner via a first communication device (MP-B, AAA-PROXY) of the communication devices, that it can exchange authentication messages with an "Authentication, Authorisation, Accounting AAA" server (AAA-S) located in the infrastructure network (INFRASTRUCTURE NETWORK) by using the "Extensible Authentication Protocol - EAP" protocol, **characterized in that**

a) a first run (1) defined according to EAP at a logon is carried out, where the first communication device (MP-B) communicates with the AAA server (AAA-S) in the role of an "authenticator" (AUTH) defined according to the EAP protocol,
b) the AAA server (AAA-S) generates basic encryption information (MA-KEY), MSKI, POLICY-A, AST(POLICY-B) for the sub network (MESH NODES) in the first run,
c) the basic encryption information (MA-KEY, MSKI, POLICY-A, AST(POLICY-B) is transmitted to the first communication device (MP-B),
d) a second run (2) defined according to EAP at a logon is carried out, where the first communication device (MP-B) communicates with a second communication device (MP-A) in the role of a "supplicant" (SUPP) defined according to the EAP protocol, leaving out a communication with the AAA server (AAA-S), wherein an authentication within the framework of the second run (2) is processed on the basis of at least one part of the basic encryption information (MA-KEY), MSKI, POLICY-A, AST(POLICY-B).

2. Method according to Claim 1, **characterized in that** the basic encryption information (MA-KEY, MSKI, POLICY-A, AST(POLICY-B) includes at least one first encryption key (MA-KEY).

3. Method according to Claim 2, **characterized in that** the first encryption key (MA-KEY) is stored in the first communication device (MP-B).

4. Method according to the preceding Claim, **characterized in that** the processing of the authentication in the second run is carried out by using the first encryption key (MA-KEY) as a common, in particular confidential, key ("pre-shared key").

5. Method according to one of the preceding claims, **characterized in that** first parameters associated with the first communication device (MP-B) and determining additional network attributes, in particular a so-called policy (AST (POLICY-B)) such as the maximum band width, QoS reservations, the period of validity, user-related account information and/or traffic filter regulations, are added to the basic encryption information (MA-KEY), MSKI, POLICY-A, AST(POLICY-B).

6. Method according to one of the preceding claims, **characterized in that** second parameters associated with the second communication device (MP-A) and determining additional network attributes, in particular a so-called policy POLICY-A)) such as the maximum band width, QoS reservations, the period of validity, user-related account information and/or traffic filter regulations are added to the basic encryption information (MA-KEY), MSKI, POLICY-A, AST(POLICY-B).

7. Method according to the preceding Claim, **characterized in that** the second parameters (POLICY-B) are transmitted protected by a second encryption key as encrypted first parameters (AST(POLICY-B).

8. Method according to the preceding Claim, **characterized in that** the second parameter (AST(POLICY-B)) is transmitted by the first communication device (MP-B) to the second communication device (MP-A).

9. Method according to one of the preceding claims, **characterized in that** a third encryption key protecting the communication between second communication device (MP-A) and AAA server (AAA-S) is derived, wherein the derivation is carried out by both the AAA server (AAA-S) and the second communication device (MP-A).

10. Method according to the preceding claim, **characterized in that** the AAA server (AAA-S) transmits configuration (AST(AAA-CONFIG)) of the communication between AAA server (AAA-S) and second communication device (MP-B) encrypted by means of the third encryption key.

11. Method according to one of Claims 9 to 10, **characterized in that** the third encryption key corresponds to the second encryption key.

12. Method according to one of Claims 9 to 11, **characterized in that** the communication between the communication devices (MP-A, MP-B) of the sub network (MESH NODE) and the AAA server (AAA-S) operates with the aid of a station (AAA-PROXY) operating in the manner of proxy server, leaving out the AAA server (AAA-S), on the basis of the third encryption key using the "Extensible Authentication Protocol - EAP" protocol.

13. Method according to the preceding claim, **characterized in that** the station operates as a converter (GW) between sub network (MESH NODES) and infrastructure network (INFRASTRUCTURE NETWORK).

14. Method according to one of the preceding claims, **characterized in that** a fourth encryption key is derived protecting the communication between second communication device (MP-A) and a station (GW) operating as converter (GW) between sub network (MESH NODES) and infrastructure network (INFRASTRUCTURE NETWORK), wherein the derivation is carried out by the AAA server (AAA-S) and is transmitted via an EAP success message (EAP-SUCCESS) defined according to EAP protocol.

15. Method according to one of Claims 2, 7 or 9 to 14, **characterized in that** the first encryption key, the second encryption key , the third encryption key and/or the fourth encryption key are derived from a session key (EMSK, MSK) associated with the sub network.

16. Method according to one of Claims 9 to 15, **characterized in that** the derivation is effected on the basis of a key derivation function (KDF) using the "Master Session Key, MSK" formed according to EAP protocol.

17. Method according to one of Claims 9 to 15 in so far as they include the object of one of Claims 9 to 13 and 15, **characterized in that** the derivation is effected on the basis of a key derivation function (KDF) using the "Extended Master Session Key, EMSK" formed according to EAP protocol.

18. Method according to the preceding Claim, **characterized in that** a function according to a cryptographic hash function, in particular SHA-1 or MD5, is used as key derivation function (KDF).

19. Method according to Claim 17, **characterized in that** a hash message authentication code function "keyed hash function", in particular HMAC according to RFC2104, is used as key derivation function (KDF).

20. Method according to one of Claims 2 or 3 to 19 in so far as they include the object of Claim 2, **characterized in that** the first encryption key is formed according to the following formula based on key derivation functions

$$\text{MA-Key} = \text{HMAC-SHA1 (MSK, "Mesh-Access-Key"),}$$

wherein

MA-Key designates the associated key
HMAC-SHA1 a keyed hash function HMAC using the hash function SHA-1, and
MSK designates the "Master Session Key" determined according to EAP protocol and
Mesh-Access-Key a string that depicts in particular the purpose of the key.

21. Method according to one of Claims 2 or 3 to 19 in so far as they include the object of Claim 2, **characterized in that** the first encryption key is formed according to the following formula based on key derivation functions

$$\text{MA-Key} = \text{HMAC-SHA1 (EMSK, "Mesh-Access-Key"),}$$

wherein

MA-Key designates the associated key
HMAC-SHA1 a keyed hash function HMAC using the hash function SHA-1, and
EMSK designates the "Extended Master Session Key" determined according to EAP protocol and
Mesh-Access-Key a string that depicts in particular the purpose of the key.

22. Method according to one of Claims 7 or 8 to 21 in so far as they include the object of Claim 7, **characterized in that** the second encryption key is formed according to the following formula based on key derivation functions

$$\text{PP-Key} = \text{HMAC-SHA1 (EMSK, "Mesh-Policy-Protection-Key"),}$$

wherein

PP-Key designates the associated key
HMAC-SHA1 a keyed hash function HMAC using the hash function SHA-1, and
EMSK designates the "Extended Master Session Key" determined according to EAP protocol and
Mesh-Policy-Protection-Key a string that depicts in particular the purpose of the key.

23. Method according to one of Claims 9 or 10 to 22 in so far as they include the object of Claim 9, **characterized in that** the third encryption key is formed according to the following formula based on key derivation functions

$$AAA\text{-}Key = HMAC\text{-}SHA1\ (EMSK,\ \text{"Mesh-AAA-Key"}),$$

wherein

AAA-Key designates the associated key
HMAC-SHA1 a keyed hash function HMAC using the hash function SHA-1, and
EMSK designates the "Extended Master Session Key" determined according to EAP protocol and
Mesh-AAA-Key a string that depicts in particular the purpose of the key.

24. Method according to one of Claims 14 or 15 to 23 in so far as they include the object of Claim 14, **characterized in that** the fourth encryption key is formed according to the following formula based on key derivation functions

$$GW\text{-}Key = HMAC\text{-}SHA1\ (EMSK),\ \text{"Mesh-GW-Key"}),$$

wherein

GW-Key designates the associated key
HMAC-SHA1 a keyed hash function HMAC using the hash function SHA-1, and
EMSK designates the "Extended Master Session Key" determined according to EAP protocol and
Mesh-GW-Key a string that depicts in particular the purpose of the key.

25. Arrangement for providing a wireless local network, **characterized by** means for accomplishing the method according to one of the preceding claims.


**Revendications**

1. Procédé de mise à disposition d'un réseau local sans fil, comportant selon la norme IEEE 802.11 et ses dérivés, en particulier IEEE 802.15 ou IEEE 802.16, des dispositifs de communication stationnaires aménagés (AP) ainsi que des dispositifs de communication mobiles (STA, AP, MP-A, MP-B) d'un sous-réseau maillé (MESH NODES) qui sont reliés à un réseau d'infrastructure (INFRASTRUCTURE NETWORK) par le biais d'un premier dispositif de communication (MP-B, AAA-PROXY) des dispositifs de communication d'une manière telle qu'il soit possible d'échanger des messages d'authentification avec un serveur AAA d'authentification, d'autorisation et de comptabilité (AAA-S) disposé dans le réseau d'infrastructure (INFRASTRUCTURE NETWORK) en utilisant le protocole d'authentification extensible (protocole EAP, de l'anglais Extensible Authentication Protocol), **caractérisé en ce que**

    a) il est effectué une première communication (1), définie lors d'une ouverture de session selon le protocole EAP, au cours de laquelle le premier dispositif de communication (MPB), dans le rôle d'un « authentificateur » (AUTH) tel qu'il est défini selon le protocole EAP, communique avec le serveur AAA (AAA-S),
    b) le serveur AAA (AAA-S) génère au cours de la première communication une information de base sur le chiffrement (MA-KEY, MSK1, POLICY-A, AST(POLICY-B)) pour le sous-réseau (MESH NODES),
    c) l'information de base sur le chiffrement (MA-KEY, MSK1, POLICY-A, AST(POLICY-B)) est transmise au premier dispositif de communication (MP-B),
    d) il est effectué une deuxième communication (2), définie lors d'une ouverture de session selon le protocole EAP, au cours de laquelle le premier dispositif de communication (MPB), dans le rôle d'un « suppliant » (SUPP) tel qu'il est défini selon le protocole EAP, communique avec un deuxième dispositif de communication (MP-A) en omettant une communication avec le serveur AAA (AAA-S), une authentification dans le cadre de la deuxième communication (2) étant exécutée sur la base d'au moins une partie de l'information de base sur le chiffrement (MA-KEY, MSK1, POLICY-A, AST(POLICY-B)).

2. Procédé selon la revendication 1, **caractérisé en ce que** l'information de base sur le chiffrement (MA-KEY, MSK1, POLICY-A, AST(POLICY-B)) contient au moins une première clé de chiffrement (MA-KEY).

3. Procédé selon la revendication 2, **caractérisé en ce que** la première clé de chiffrement (MA-KEY) est mémorisée dans le premier dispositif de communication (MP-B).

**4.** Procédé selon la revendication précédente, **caractérisé en ce que** l'exécution de l'authentification au cours de la deuxième communication a lieu en utilisant la première clé de chiffrement (MA-KEY) en tant que clé commune « pre-shared key » (clé pré-partagée), particulièrement secrète.

**5.** Procédé selon l'une quelconque des revendications précédentes, **caractérisé en ce que** des premiers paramètres déterminant des attributs de réseau et associés au premier dispositif de communication (MP-B), en particulier ce que l'on appelle une politique (AST(POLICY-B)) comme la largeur de bande maximale, des réservations de qualité de service (QoS), la durée de validité, des informations de compte liées à l'utilisateur et/ou une règle de filtre de trafic, sont ajoutés en plus à l'information de base sur le chiffrement (MA-KEY, MSK1, POLICY-A, AST (POLICY-B)).

**6.** Procédé selon l'une quelconque des revendications précédentes, **caractérisé en ce que** des deuxièmes paramètres déterminant des attributs de réseau et associés au deuxième dispositif de communication (MP-A), en particulier ce que l'on appelle une politique (POLICY-A) comme la largeur de bande maximale, des réservations de qualité de service (QoS), la durée de validité, des informations de compte liées à l'utilisateur et/ou une règle de filtre de trafic, sont ajoutés en plus à l'information de base sur le chiffrement (MA-KEY, MSK1, POLICY-A, AST(POLICY-B)).

**7.** Procédé selon la revendication précédente, **caractérisé en ce que** les deuxièmes paramètres (POLICY-B), protégés par une deuxième clé de chiffrement, sont transmis en tant que premiers paramètres chiffrés (AST(POLICY-B)).

**8.** Procédé selon la revendication précédente, **caractérisé en ce que** les deuxièmes paramètres (AST(POLICY-B)) sont transmis par le premier dispositif de communication (MP-B) au deuxième dispositif de communication (MP-A).

**9.** Procédé selon l'une quelconque des revendications précédentes, **caractérisé en ce qu'**il est déduit une troisième clé de chiffrement protégeant la communication entre le deuxième dispositif de communication (MP-A) et le serveur AAA (AAA-S), la déduction étant exécutée aussi bien par le serveur AAA (AAA-S) que par le deuxième dispositif de communication (MP-A).

**10.** Procédé selon la revendication précédente, **caractérisé en ce que** le serveur AAA (AAA-S) retransmet au moyen de la troisième clé de chiffrement une configuration chiffrée (AST(AAA-CONFIG)) de la communication entre le serveur AAA (AAAS) et le deuxième dispositif de communication (MP-B).

**11.** Procédé selon l'une des revendications 9 à 10, **caractérisé en ce que** la troisième clé de chiffrement correspond à la deuxième clé de chiffrement.

**12.** Procédé selon l'une des revendications 9 à 11, **caractérisé en ce que** la communication entre les dispositifs de communication (MP-A, MP-B) du sous-réseau (MESH NODE) et le serveur AAA (AAA-S) fonctionne à l'aide d'une station fonctionnant selon la manière d'un serveur mandataire (AAA-PROXY) en omettant le serveur AAA (AAA-S) sur la base de la troisième clé de chiffrement en utilisant le protocole d'authentification extensible (protocole EAP).

**13.** Procédé selon la revendication précédente, **caractérisé en ce que** la station fonctionne en tant que réémetteur (GW) entre le sous-réseau (MESH NODES) et le réseau d'infrastructure (INFRASTRUCTURE NETWORK).

**14.** Procédé selon l'une quelconque des revendications précédentes, **caractérisé en ce qu'**il est déduit une quatrième clé de chiffrement protégeant la communication entre le deuxième dispositif de communication (MP-A) et une station (GW) fonctionnant en tant que réémetteur (GW) entre le sous-réseau (MESH NODES) et le réseau d'infrastructure (INFRASTRUCTURE NETWORK), la déduction étant exécutée par le serveur AAA (AAA-S) et étant transmise par le biais d'un message de succès EAP (EAP-SUCCESS) défini selon le protocole EAP.

**15.** Procédé selon l'une des revendications 2, 7 ou 9 à 14, **caractérisé en ce que** la première clé de chiffrement, la deuxième clé de chiffrement, la troisième clé de chiffrement et/ou la quatrième clé de chiffrement sont déduites d'une clé de session (EMSK, MSK) associée au sous-réseau.

**16.** Procédé selon l'une des revendications 9 à 15, **caractérisé en ce que** la déduction est effectuée sur la base d'une fonction de déduction de clé (KDF) employant la « clé de session maître, MSK » formée selon le protocole EAP.

**17.** Procédé selon l'une des revendications 9 à 15 autant qu'elle comporte l'objet de l'une des revendications 9 à 13 et 15, **caractérisé en ce que** la déduction est effectuée sur la base d'une fonction de déduction de clé (KDF) employant la « clé de session maître étendue » formée selon le protocole EAP.

18. Procédé selon l'une quelconque des revendications précédentes, **caractérisé en ce que** la fonction de déduction de clé (KDF) employée est une fonction selon une fonction de hachage cryptographique, en particulier SHA-1 ou MD5.

19. Procédé selon la revendication 17, **caractérisé en ce que** la fonction de déduction de clé (KDF) employée est une fonction de code d'authentification de message de hachage « fonction de hachage chiffrée », en particulier HMAC selon le document RFC 2104.

20. Procédé selon l'une des revendications 2 ou 3 à 19 dans la mesure où elle contient l'objet de la revendication 2, **caractérisé en ce que** la première clé de chiffrement est formée selon la formule suivante basée sur des fonctions de déduction de clé

$$MA\text{-}Key = HMAC\text{-}SHA1 \; (MSK, \; « \; Mesh\text{-}Access\text{-}Key»),$$

MA-Key représentant la clé associée
HMAC-SHA1 représentant une fonction de hachage chiffrée
HMAC employant la fonction de hachage SHA-1, et
MSK représentant la « clé de session maître » déterminée selon le protocole EAP et
Mesh-Access-Key représentant une chaîne de caractères qui reproduit en particulier l'emploi prévu de la clé.

21. Procédé selon l'une des revendications 2 ou 3 à 19 dans la mesure où elle contient l'objet de la revendication 2, **caractérisé en ce que** la première clé de chiffrement est formée selon la formule suivante basée sur des fonctions de déduction de clé

$$MA\text{-}Key = HMAC\text{-}SHA1 \; (EMSK, \; « \; Mesh\text{-}Access\text{-}Key \; »),$$

MA-Key représentant la clé associée,
HMAC-SHA1 représentant une fonction de hachage chiffrée
HMAC employant la fonction de hachage SHA-1, et
EMSK représentant la « clé de session maître étendue » déterminée selon le protocole EAP et
Mesh-Access-Key représentant une chaîne de caractères qui reproduit en particulier l'emploi prévu de la clé.

22. Procédé selon l'une des revendications 7 ou 8 à 21 dans la mesure où elle contient l'objet de la revendication 7, **caractérisé en ce que** la deuxième clé de chiffrement est formée selon la formule suivante basée sur des fonctions de déduction de clé

$$PP\text{-}Key = HMAC\text{-}SHA1 \; (EMSK, \; « \; Mesh\text{-}Policy\text{-}Protection\text{-}Key \; »),$$

PP-Key représentant la clé associée,
HMAC-SHA1 représentant une fonction de hachage chiffrée
HMAC employant la fonction de hachage SHA-1, et
EMSK représentant la « clé de session maître étendue » déterminée selon le protocole EAP et
Mesh-Policy-Protection-Key représentant une chaîne de caractères qui reproduit en particulier l'emploi prévu de la clé.

23. Procédé selon l'une des revendications 9 ou 10 à 22 dans la mesure où elle contient l'objet de la revendication 9, **caractérisé en ce que** la troisième clé de chiffrement est formée selon la formule suivante basée sur des fonctions de déduction de clé

$$AAA\text{-}Key = HMAC\text{-}SHA1 \; (EMSK, \; « \; Mesh\text{-}AAA\text{-}Key \; »),$$

AAA-Key représentant la clé associée,
HMAC-SHA1 représentant une fonction de hachage chiffrée
HMAC employant la fonction de hachage SHA-1, et

EMSK représentant la « clé de session maître étendue » déterminée selon le protocole EAP et
Mesh-AAA-Key représentant une chaîne de caractères qui reproduit en particulier l'emploi prévu de la clé.

**24.** Procédé selon l'une des revendications 14 ou 15 à 23 dans la mesure où elle contient l'objet de la revendication 14, **caractérisé en ce que** la quatrième clé de chiffrement est formée selon la formule suivante basée sur des fonctions de déduction de clé

$$GW\text{-}Key = HMAC\text{-}SHA1 \ (EMSK, \ \text{« Mesh-GW-Key »}),$$

GW-Key représentant la clé associée,
HMAC-SHA1 représentant une fonction de hachage chiffrée
HMAC employant la fonction de hachage SHA-1, et
EMSK représentant la « clé de session maître étendue » déterminée selon le protocole EAP et
Mesh-GW-Key représentant une chaîne de caractères qui reproduit en particulier l'emploi prévu de la clé.

**25.** Dispositif de mise à disposition d'un réseau local sans fil, **caractérisé par** un moyen permettant d'exécuter le procédé selon l'une quelconque des revendications précédentes.

# FIG 1

Stand der Technik

EP 2 052 487 B1

# FIG 2
## Stand der Technik

STA             AP             AAA-S

SUPP        AUTH        AS

802.11 Verbindungs-Setup

EAP AUTHENTICATION

EAP-SUCCESS: MSK [POLICY-STA]

802.11 4WHS(MSK)

Geschützte Kommunikation

EP 2 052 487 B1

# FIG 3
## Stand der Technik

MP-A          MP-B          AAA-S

⟨SUPP⟩        ⟨AUTH⟩        ⟨AS⟩

⟨— 802.11 Verbindungs-Setup —⟩

⟨——————— EAP AUTHENTICATION1 ———————⟩

⟨——— EAP-SUCCESS: MSK1 [POLICY-A] ———

⟨— 802.11 4WHS(MSK1) —⟩

⟨AUTH⟩        ⟨SUPP⟩        ⟨AS⟩

⟨——————— EAP AUTHENTICATION2 ———————⟩

⟨——— EAP-SUCCESS: MSK2 [POLICY-B] ———

⟨— 802.11 4WHS(MSK2) —⟩

Geschützte
Kommunikation basierend
auf KDF(MSK1)

Geschützte
Kommunikation basierend
auf KDF(MSK2)

# FIG 4

MP-A    MP-B    AAA-PROXY [optional]    AAA-S

SUPP    AUTH    AS

1

802.11 Verbindungs-Setup

EAP AUTHENTICATION1

EAP-SUCCESS: MSK1,
MA-KEY[POLICY-A],
[AST(POLICY-B)]

AST(POLICY-B)

802.11 4WHS(MSK1)

2

AS AUTH    SUPP

EAP-Lauf basierend auf MA-KEY AST(POLICY-B)

EAP AUTHENTICATION2

EAP-SUCCESS: MSK2

802.11 4WHS(MSK2)

Geschützte Kommunikation basierend auf KDF(MSK1)

Geschützte Kommunikation basierend auf KDF(MSK2)

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20050152305 A1

### In der Beschreibung aufgeführte Nicht-Patentliteratur

- *IEEE standard for local and metropolitan area networks - Port-based network access control,* 13. Dezember 2004, ISBN 0-7381-4528-8, 37-40
- *IEEE standard for local and metropolitan area networks - Wireless LAN Medium Access Conrol - Security Enhancements,* 23. Juli 2004, ISBN 0-7381-4073-2, 13-1519-20
- Faccin, S.M., u.a.: Mesh WLAN networks: concept and system design. *Wireless Communications, IEEE,* April 2006, vol. 13 (2), 10-17
- **Jyh-Cheng.** Wireless LAN security and IEEE 802.11i. *Wireless Communications, IEEE,* Februar 2005, vol. 12 (1), 27-36
- **Fan, Y.** An improved security scheme in WMAN based on IEEE Standard 802.16. *Proceedings, International Conference on Wirelless Communications,* 23. September 2005, vol. 2, 1191-1194